# EUROPÄISCHE PATENTSCHRIFT

(11) **EP 0 668 097 B1**
(45) Veröffentlichungstag und Bekanntmachung des Hinweises auf die Patenterteilung: **24.07.2002**
(21) Anmeldenummer: 94119385.6
(22) Anmeldetag: 08.12.1994
(51) Int. Cl.: B01D 63/08

(54) **Vorrichtung zum Filtern und Trennen von Strömungsmedien mittels nach Art von Membrankissen ausgebildeten Filterelementen**
Filtration and separation apparatus for fluids with filter elements in the form of membrane pads
Appareil de filtration et de séparation de fluides pourvu d'éléments filtrants sous forme de coussins à membranes

(30) Priorität: 18.02.1994 DE 4405175
(43) Veröffentlichungstag der Anmeldung: 23.08.1995
(73) Patentinhaber: Pall Corporation, East Hills, New York 11548 (US)
(72) Erfinder: Heine, Wilhelm, D-21077 Hamburg (DE); Mohn, Jürgen, D-22081 Reinbek (DE)
(74) Vertreter: Hoeger, Stellrecht & Partner

(56) Entgegenhaltungen:
- WO-A-81/01371
- DE-A- 3 317 517
- DE-U- 8 709 105
- DE-U- 9 402 676
- NL-A- 7 415 083
- US-A- 3 494 465
- US-A- 5 183 567

## Beschreibung

Die Erfindung betrifft eine Vorrichtung zum Filtern und Trennen von Strömungsmedien durch Umkehrosmose sowie Mikro-, Ultra- und Nanofiltration mit einem druckdichten Gehäuse mit einem Einlaß für das Strömungsmedium und Auslässen für das Retentat sowie das Permeat und einer Mehrzahl im Gehäuse aufgenommener Abstandselemente, wobei jeweils zwischen zwei flächigen Abstandselementen, die vom Störmungsmedium umflossen werden, ein Filterelement nach Art eines Membrankissens eingeschlossen ist.

Eine Vorrichtung dieser Art ist beispielsweise aus der DE-PS 37 15 183 bekannt. Bei dieser bekannten Vorrichtung wird das zu trennende Strömungsmedium in einen Einlaß der Vorrichtung gegeben und durchströmt dann in strenger Regelmäßigkeit das zwischen zwei Abstandselementen angeordnete Membrankissen abwechselnd von außen nach innen und dann von innen nach außen, bis es in angereicherter Form nach entsprechendem Umströmen aller Membrankissen die Vorrichtung als angereichertes Retentat verläßt. Die Abstandselemente sind dabei kreisscheibenförmig ausgebildet, das Membrankissen kann ebenfalls kreisscheibenförmig ausgebildet sein oder aber zur Annäherung an eine kreisförmige Fläche eine n-eckige Kontur aufweisen.

Die bekannte Vorrichtung liefert für bestimmte Anwendungsfälle wie die Meerwasserentsalzung, d.h. zur Gewinnung von Trinkwasser aus Meerwasser sehr gute Ergebnisse, wobei sich bei der bekannten Vorrichtung auch bei großen Filterelementstapeln die Partialdruckdifferenzen des Strömungsmediums zwischen Zulauf und Ablauf in vertretbaren Grenzen halten.

Wenn jedoch Strömungsmedien, beispielsweise Flüssigkeiten mit sehr hohem Anteil an organischen und/oder anorganischen Inhaltsstoffen getrennt werden sollen, kann sich dort nachteiligerweise jedoch sehr schnell ein Filterkuchen ausbilden, d.h. die Inhaltsstoffe setzen sich auf dem Membrankissen bzw. an den Stellen des Abstandselementes ab, in denen die Strömungsgeschwindigkeit des Strömungsmediums niedriger als an sonstigen anderen Stellen der Vorrichtung ist. Die Folge ist, daß die Vorrichtung ihre Trennwirksamkeit verliert und demontiert und gegebenenfalls auf aufwendige Weise gereinigt werden muß. Diese Prozedur ist insbesondere bei zu trennenden Strömungsmedien wie bei kommunalen und/oder gewerblichen Abwässern und hochbelastetem Sickerwasser, wie es beispielsweise auf Mülldeponien anfällt, nachteilig und regelmäßig auch nicht durchführbar, da insbesondere für derartige Anwendungen eine Vorrichtung nahezu wartungsfrei funktionieren muß, da eine Unterbrechung der Funktion der Vorrichtung für Reinigungs-, Wartungs- und Austauschzwecke mit schwerwiegenden ökologischen und wirtschaftlichen Folgen verbunden ist.

Aus der WO 81/01371 ist eine Vorrichtung bekannt, bei der mehrere hintereinander angeordnete Membranstempel aus Filterelementen und dazwischen angeordneten Abstandselementen in einem kastenförmigen Innengehäuse eingeschlossen sind. Das Innengehäuse ist in einem rohrförmigen Außengehäuse angeordnet. Das zu filtrierende Medium tritt am offenen Ende des rohrförmigen Außengehäuses ein und durchfließt nacheinander die Membranstapel. Das am letzten Membranstapel aus dem Innengehäuse austretende Retentat wird umgelenkt und in einem zwischen Innen- und Außengehäuse gebildeten Hohlraum zum offenen Ende des Außengehäuses zurückgeleitet.

Die US 3,494,465 offenbart eine Filteranordnung mit hintereinander angeordneten Stapeln von Filterelementen, welch letztere im Stapel durch am Randbereich vorhandene Rippen voneinander auf Abstand gehalten werden. Das Gehäuse bildet einen längsgestreckten Kanal vom Eingang zum Ausgang der Vorrichtung, in dem die Stapel mit den Filterelementen parallel zur Strömungsrichtung angeordnet werden. Die Filterelemente sind nicht vom Typ Membrankissen, sondern bestehen aus einem Trägerelement, auf das beidseitig Membranen auflaminiert sind.

Es ist Aufgabe der vorliegenden Erfindung, eine Vorrichtung der eingangs genannten Art zu schaffen, die in der Lage ist, unter anderem Flüssigkeiten mit einem hohen organischen und/oder anorganischen Anteil an Inhaltsstoffen, beispielsweise gewerbliches und kommunales Abwasser sowie hochbelastetes Sickerwasser, zu trennen, wobei keine Ablagerungen in der Vorrichtung, wie z. B. in Form eines Filterkuchens, während des Betriebes vonstatten gehen sollen, und wobei die Vorrichtung, falls es erforderlich sein sollte, auf einfache Weise zu reinigen und zu warten ist, und daß die Vorrichtung einfach und kostengünstig herstellbar ist und ohne weiteres an den individuellen Belastungsgrad der zu trennenden Flüssigkeiten angepaßt werden kann.

Gelöst wird die Aufgabe durch eine Vorrichtung zum Filtern und Trennen von Strömungsmedien durch Umkehrosmose sowie Mikro-, Ultra- und Nanofiltration mit einem druckdichten Gehäuse mit einem Einlaß für das Strömungsmedium und Auslässen für das Retentat sowie das Permeat und einer Mehrzahl von gesonderten Stapeln von flächigen, vom Strömungsmedium umflossenen Abstandselementen mit jeweils dazwischen angeordneten Filterelementen nach Art eines Membrankissens, wobei die Stapel hintereinander oder nebeneinander im Strömungsweg des Strömungsmediums angeordnet sind, und wobei das Gehäuse einen Längskanal für das Strömungsmedium bildet, der vom Einlaß zum Auslaß der Vorrichtung im wesentlichen umlenkungsfrei verläuft, und wobei die Stapel jeweils von zwei die Stapel in sich einschließenden, im Außenquerschnitt im wesentlichen halbkreisförmigen Schalenelementen aufgenommen werden.

Der Vorteil der erfindungsgemäßen Vorrichtung besteht im wesentlichen darin, daß durch die erfindungsgemäß vorgeschlagene Anordnung der Stapel von Abstandselementen mit jeweils dazwischen angeordneten Membrankissen innerhalb der Vorrichtung, d. h. innerhalb des Gehäuses quasi ein offener Kanal für das Strömungsmedium geschaffen wird, mit dem, anders als beim eingangs genannten Stand der Technik, extrem hohe Strömungsgeschwindigkeiten des Strömungsmediums zwischen dem Einlaß des Strömungsmediums und dem Auslaß des die Vorrichtung als Retentat verlassenden Strömungsmediums möglich sind und somit die Bildung von Ablagerungen beispielsweise in Form eines Filterkuchens ausgeschlossen ist, da die Stapel von Abstandshaltern und dazwischen angeordneten Membrankissen faktisch für das längskanalartig fließende Strömungsmedium keine Totzonen aufweisen und das Strömungsmedium quasi umlenkungsfrei vom Einlaß zum Auslaß der Vorrichtung strömen kann.

Erfindungsgemäß werden die Stapel jeweils von zwei die Stapel in sich einschließenden, im Außenquerschnitt im wesentlichen halbkreisförmigen Schalenelementen aufgenommen. Dadurch ist es möglich, die Stapel zwischen den Schalenelementen gewissermaßen aus Abstandselementen und zwischen den Abstandselementen angeordneten Membrankissen vorzukonfektionieren, so daß die Stapel lediglich im Gehäuse der Vorrichtung aneinandergesetzt zu werden brauchen, und zwar in bezug auf die Menge der Stapel in Abhängigkeit von dem Belastungsgrad der zu trennenden Flüssigkeit.

Um die Anzahl der Einzelteile der Vorrichtung auch unter dem Gesichtspunkt des Zieles einer möglichst kostengünstigen Bereitstellbarkeit gering zu halten, ist es vorteilhaft, daß wenigstens eines der Schalenelemente einen das Schalenelement in Längsrichtung durchquerenden Permeatabflußkanal aufweist, der mit Permeatabflußöffnungen, die in den Innenbodenbereich der Schalenelemente münden, verbunden sind. Durch die Ausgestaltung ist gewissermaßen der Permeatabflußkanal integral mit den Schalenelementen ausgebildet.

Vorzugsweise ist der Innenquerschnitt der Schalenelemente im wesentlichen rechteckig ausgebildet und zwar mit derart gewählten Abmaßen, daß der Membranstapel kraftschlüssig zwischen zwei in bezug auf ihre Außenkontur halbkreisförmigen Schalenelementen aufgenommen wird, d.h. die Membrankissen werden darin derart im Zusammenwirken mit den dazwischen angeordneten Abstandselementen aufgenommen, daß keine zusätzlichen Spannbolzen, die die Membrankissen und die Abstandselemente beim erwähnten Stand der Technik durchqueren, nötig sind. Diese kraftschlüssige Aufnahme des Stapels aus Membranelementen sowie Abstandselementen zwischen den Schalenelementen kann vorteilhafterweise dadurch erreicht werden, daß die Schalenelemente unter Einschluß des jeweiligen Stapels durch Verbindungsmittel lösbar verbindbar sind, beispielsweise mittels einer Bolzen-Mutter-Verbindung.

Gemäß einer vorteilhaften weiteren Ausgestaltung der Vorrichtung ist eine aus zwei miteinander verbundenen Schalenelementen gebildete Stapelschale mit einer benachbarten Stapelschale über eine in den Stapelschalen ausgebildete Renkverbindung lösbar verbindbar, d.h. die aneinandergesetzten Stapelschalen können somit auf einfache Weise kraftschlüssig miteinander verbunden werden, wobei auch bei dieser Ausgestaltung einer Verbindung der Stapelschalen untereinander eine beliebige geeignete Menge an Stapelschalen aneinandergesetzt werden kann, und zwar in Abhängigkeit des Anteils der Inhaltsstoffe in der zutrennenden Flüssigkeit bzw. aufgrund anderer notwendiger Vorgaben für den mit der Vorrichtung zu erreichenden Trenngrad.

Zwei benachbarte Stapelschalen können jeweils im verbundenen Zustand mittels eines Verbindungsmittels lösbar gesichert werden, und zwar beispielsweise ebenfalls mittels einer Bolzen-Mutter-Verbindung. Diese Sicherungsmöglichkeit ermöglicht es auch, eine bestimmte Mehrzahl von Stapelschalen für den Einbau in das Gehäuse der Vorrichtung vollständig vorzukonfektionieren.

Die in der Vorrichtung erfindungsgemäß verwendeten Abstandselemente weisen vorteilhafterweise im wesentlichen eine rechteckige Form auf und sind in Längsrichtung mit zwei voneinander beabstandeten Permeatabflußöffnungen versehen. Damit ist eine optimierte Abflußmöglichkeit des Permeats sichergestellt.

Um sicherzustellen, daß die Membrankissen im Bereich ihrer auch in diesen ausgebildeten Permeataustrittsöffnungen gegenüber den jeweils benachbarten Abstandselementen abgedichtet sind, sind vorzugsweise um die Permeatabflußöffnungen herum verlaufende nutartige Vertiefungen vorgesehen, in denen Dichtelemente zur Abdichtung gegenüber dem Membrankissen aufnehmbar sind. Gleiches gilt sinngemäß auch für die Permeatablauföffnungen in den Bodenflächen der Schalenelemente, so daß gleichermaßen zwischen dem jeweils letzten Abstandselement und dem Boden der Schalenelemente angeordnete Membrankissen auf gleiche Weise dichtend gegenüber dem Schalenelement angeordnet werden können.

Um sicherzustellen, daß das Membrankissen, das vom Strömungsmedium beidseitig möglichst vollflächig umflossen werden soll, mit einer so gering wie möglichen Fläche auf dem Abstandselement bzw. auf der jeweiligen Bodenfläche der Schalenelemente aufliegt, ist auf den Oberflächen des Abstandselements und/oder den Bodenflächen eine Mehrzahl von erhaben von den Oberflächen vorstehenden Vorsprüngen vorgesehen, so daß das Membrankissen jeweils nur punktuell mit den jeweils angrenzenden Abstandselementen bzw. Bodenflächen der Schalenelemente in Berührung kommt.

Obwohl die Vorsprünge grundsätzlich eine beliebige geeignete Form aufweisen können, sind diese vorzugsweise in einer Ebene parallel zu den Oberflächen und/oder Bodenflächen mit einem im wesentlichen kreisförmigen Querschnitt versehen, bei einer anderen vorteilhaften Ausgestaltung weisen die Vorsprünge in einer Ebene parallel zu den Oberflächen und/oder Bodenoberflächen einen im wesentlichen tropfenförmigen Querschnitt auf.

Das Abstandselement und/oder das Schalenelement können, obwohl beide Elemente grundsätzlich aus beliebigen geeigneten Werkstoffen hergestellt werden können, vorzugsweise aus Kunststoff hergestellt werden, so daß diese Teile auf einfache und kostengünstige Weise beispielsweise in einem Spritzgußherstellungsschritt hergestellt werden können mit der Folge, daß diese als Massenprodukte kostengünstig bereitstellbar sind.

Als Kunststoff wird dabei vorzugsweise Polystyrol, Acrylnitril-Butadien-Styrol-Copolymere (ABS), Styrol-Acrylnitril-Copolymere (SAN), beispielsweise Luran™, verwendet.

Die Erfindung wird nun unter Bezugnahme auf die schematischen Zeichnungen anhand eines Ausführungsbeispieles im einzelnen beschrieben. Darin zeigen:
- Fig. 1: in der Seitenansicht und teilweise im Schnitt eine Vorrichtung mit zwei Stapelschalen, in denen jeweils ein Stapel aus einer Mehrzahl von Abstandselementen und dazwischen angeordneten Membrankissen angeordnet besteht,

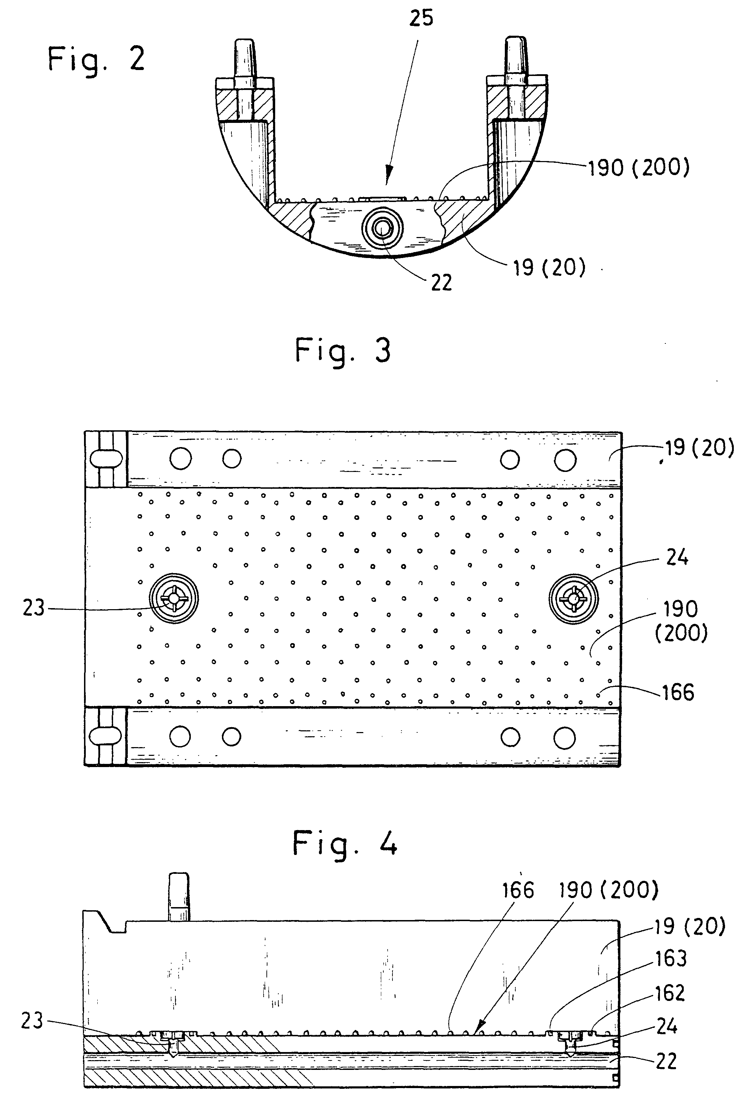

- Fig. 2: in der Ansicht quer zur Darstellung von Figur 1 einen teilweisen Schnitt durch ein Schalenelement,
- Fig. 3: eine Draufsicht auf das in Figur 2 dargestellte Schalenelement,
- Fig. 4: einen Längsschnitt durch das in Figur 3 dargestellte Schalenelement,
- Fig. 5: eine Ansicht auf ein Schalenelement in der Ansicht von oben gemäß der Darstellung von Figur 1,
- Fig. 6: in der Seitenansicht die Darstellung des Schalenelements gemäß Figur 5,
- Fig. 7: einen schematischen Schnitt durch eine aus zwei Schalenelementen gebildete Stapelschale in in das Gehäuse eingebrachtem Zustand,
- Fig. 8: eine Draufsicht auf ein Abstandselement, das in einer Mehrzahl im Stapel zwischen zwei Schalenelementen gemäß Figur 7 unter Einschluß jeweiliger Membrankissen angeordnet ist,
- Fig. 9: einen Schnitt entlang der Linie A-B von Figur 8 in vergrößertem Maßstab,
- Fig. 10: eine Ansicht auf das in Figur 8 dargestellte Abstandselement von unten und
- Fig. 11 a,b: im Schnitt unterschiedliche Ausgestaltungen der auf den Abstandselementen und/oder den Bodenflächen der Schalenelemente angeordneten Vorsprünge.

Die Vorrichtung 10 besteht im wesentlichen aus einem Gehäuse 11, das auf an sich bekannte Weise beidseitig mit Endelementen 110, 111 druckdicht über umlaufende Dichtungsmittel 112, 113, beispielsweise in Form sogenannter 0-Ringe, gegenüber dem Gehäuse 11 verschlossen ist. Im Endelement 110 ist ein Einlaß 12 für das zur Vorrichtung 10 zuzuführende Strömungsmedium 15 vorgesehen. Im Endelement 111 ist ein Auslaß 13 für das angereicherte Strömungsmedium, das sogenannte Retentat, vorgesehen und ein Auslaß 14 für das Permeat. Die Endelemente 110, 111 werden über Ringelemente 114, 115, die ein Außengewinde haben, in ihrer Position im Gehäuse 11 gesichert, wobei das Gehäuse 11 an den betreffenden Stellen des Eingriffs der Ringelemente 114, 115 ein Innengewinde aufweist. Das Gehäuse 11 weist vorzugsweise einen kreisförmigen Querschnitt auf, dieses ist jedoch nicht für alle Fälle zwingend.

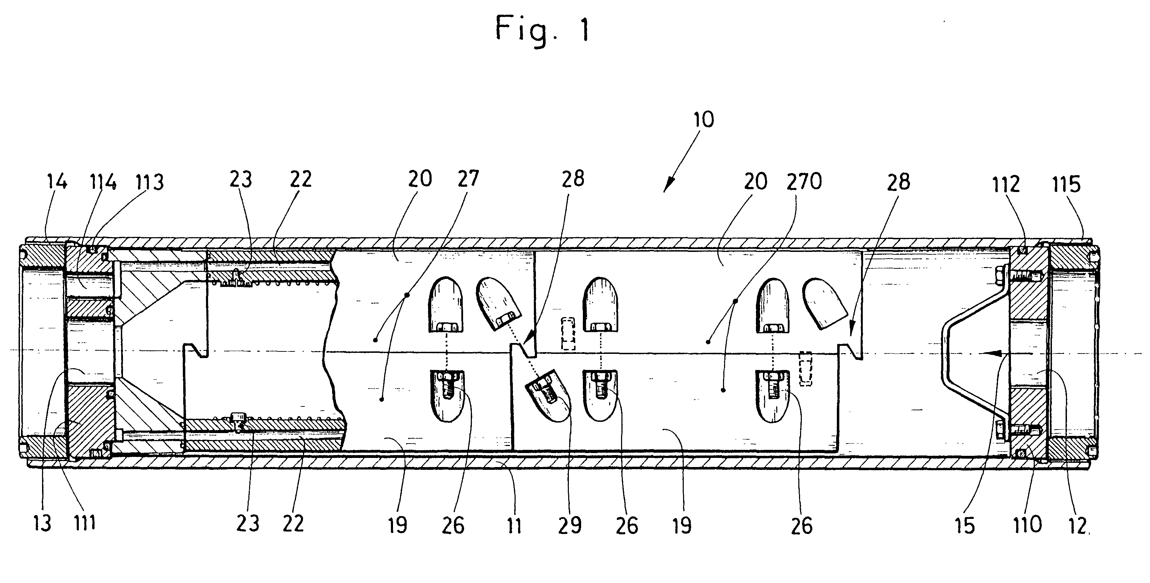

Im Gehäuse 11 ist eine Mehrzahl von Stapelschalen 27, 270 vorgesehen, wobei im Beispiel gemäß Figur 1 zwei Stapelschalen 27, 270 vorgesehen sind. Es sei darauf hingewiesen, daß die Anzahl der Stapelschalen 27 pro Vorrichtung 10 beliebig in Abhängigkeit der Länge des Gehäuses 11 variiert werden kann, und zwar in Abhängigkeit der Art der zu trennenden Flüssigkeit bzw. der Art und des Umfanges der darin enthaltenen organischen und/oder anorganischen Inhaltsstoffe.

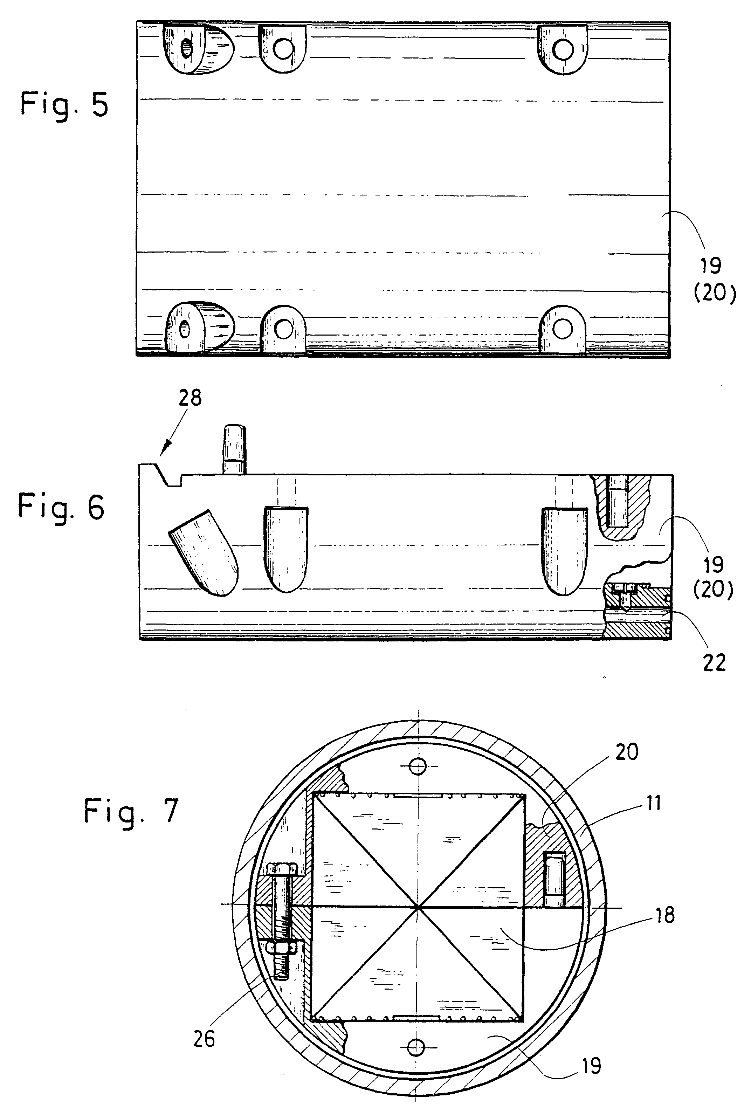

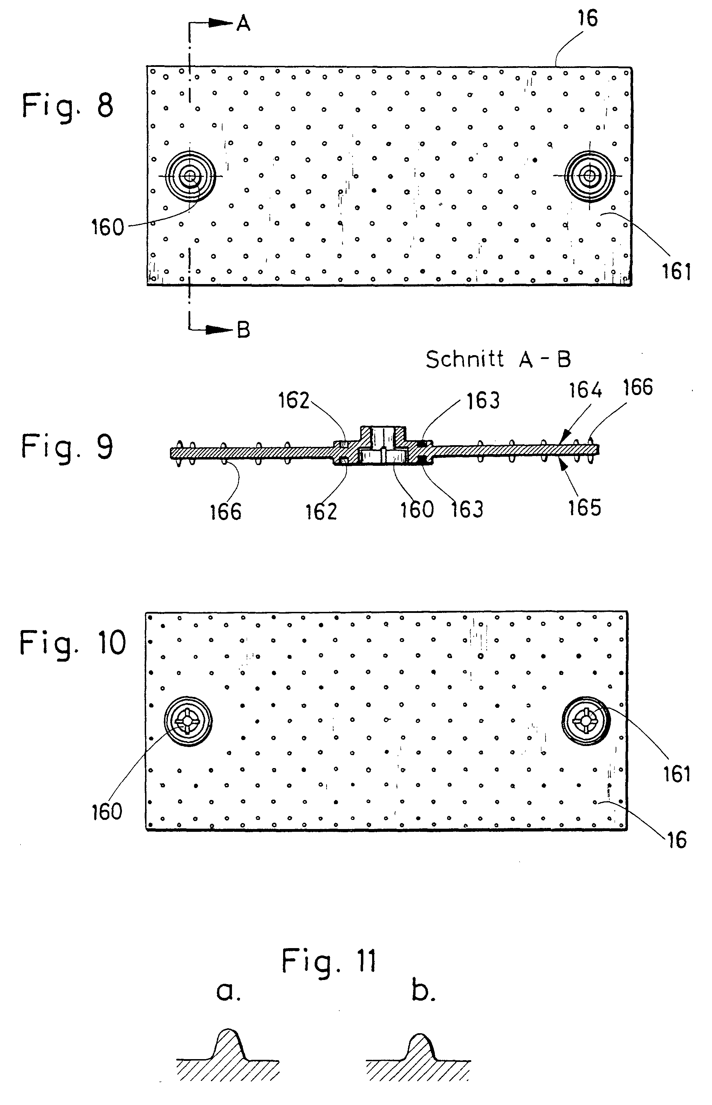

Die Stapelschalen 27 sind alle identisch, so daß im folgenden lediglich eine Stapelschale 27 beschrieben wird. Eine Stapelschale 27 besteht aus zwei Schalenelementen 19, 20, vergleiche Figur 7. Die Schalenelemente 19, 20 weisen einen im wesentlichen halbkreisförmigen Außenquerschnitt auf. Der Innenquerschnitt der Schalenelemente 19, 20 ist im wesentlichen rechteckig ausgebildet, wobei zwei miteinander verbundene Schalenelemente 19, 20, vergleiche Figur 7, einen annähernd quadratischen bzw. rechteckigen Innenquerschnitt aufweisen. Die Schalenelemente 19, 20 können mittels Verbindungsmitteln 26, beispielsweise mittels einer Bolzen-Mutter-Verbindung, lösbar verbunden werden. Zwei Schalenelemente 19, 20 schließen in sich kraftschlüssig einen Stapel 18 ein, der durch eine Mehrzahl von Abstandselementen 16, vergleiche die Figuren 8 bis 10, und durch Membrankissen 17 gebildet wird, die jeweils zwischen zwei Abstandselementen 16 angeordnet sind. Membrankissen 17 derart, wie sie in der Vorrichtung 10 zur Bildung des Stapels 18 zusammen mit den Abstandselementen 16 verwendet werden, sind beispielsweise in der EP-B-0 129 663 beschrieben. Die gemäß der Erfindung in der Vorrichtung 10 verwendeten, an sich bekannten Membrankissen 17 weisen einen in dem vorerwähnten vorveröffentlichten Dokument beschriebenen bekannten Aufbau auf, so daß bezüglich des Aufbaus dieser Membrankissen 17 auf das vorerwähnte vorveröffentlichte Dokument verwiesen wird.

Die Abstandselemente 16 weisen eine im wesentlichen rechteckige Form auf. In Längsrichtung sind im Abstandselement 16 zwei voneinander beabstandete Permeatabflußöffnungen 160, 161 vorgesehen. Um die Permeatabflußöffnungen 160, 161 herum sind nutartige Vertiefungen 162 vorgesehen, in denen Dichtelemente 163 zur Abdichtung gegenüber dem Membrankissen 17 aufnehmbar sind. In den Bodenflächen 190, 200 der Schalenelemente 19, 20 sind analog zu den Permeatabflußöffnungen 160, 161 der Abstandselemente 16 Permeatablauföffnungen 23, 24 ausgebildet, die ebenfalls von nutartigen, umlaufenden Vertiefungen 162 begrenzt sind, in denen ebenfalls Dichtelemente 163 zur Abdichtung gegenüber dem Membrankissen 17 aufnehmbar sind.

Die Permeatablauföffnungen 23, 24 in den Schalenelementen 19, 20, die in Längsrichtung einen gleichen Abstand voneinander haben wie die Permeatabflußöffnungen 160, 161 der Abstandselemente 16, münden in einen in Längsrichtung die Schalenelemente 19, 20 durchquerenden Permeatabflußkanal 22.

Der vorbeschriebene Stapel 18 wird somit über die Verbindungsmittel 26 kraftschlüssig zwischen zwei Schalenelementen 19, 20 eingeschlossen, wobei im verbundenen Zustand der Schalenelemente 19, 20 gewährleistet ist, daß von den Membrankissen 17 das getrennte Permeat stirnseitig aus den Permeataustrittsöffnungen der Membrankissen 17 in die Permeatabflußöffnung in 160, 161 der Abstandselemente 16 und über die Permeatablauföffnungen 23, 24 der Schalenelemente 19, 20 ablaufen und im Permeatabflußkanal 22 gesammelt werden kann und von dort zum Auslaß 14 der Vorrichtung 10 geleitet werden kann.

Auf den Oberflächen 164, 165 der Abstandselemente 16 und auf den Bodenflächen 190, 200 der Schalenelemente 19, 20 ist eine Mehrzahl erhaben von den Oberflächen 164, 165 bzw. von den Bodenflächen 190, 200 wegstehenden Vorsprüngen 166 vorgesehen. Dadurch wird erreicht, daß die Membrankissen 17 lediglich punktuell auf den Abstandselementen 16 bzw. auf den Bodenflächen 190, 200 der den Stapel 18 begrenzenden Schalenelementen 19, 20 aufliegen.

Zwei benachbarte Stapelschalen 27, 270 gemäß dem vorgeschriebenen Aufbau können jeweils über in den Stapelschalen 27, 270 ausgebildete Renkverbindungen 28 lösbar verbunden werden. Im verbundenen Zustand ist die Renkverbindung 28 zwischen zwei benachbarten Stapelschalen 27, 270 ebenfalls mittels eines Verbindungsmittels 29 lösbar herstellbar. Dieses Verbindungsmittel kann beispielsweise aus einer Bolzen-Mutter-Verbindung bestehen, ähnlich wie das Verbindungsmittel 26 zwischen den beiden Schalenelementen 19, 20.

Auf den Oberflächen 164, 165 der Abstandselemente 16 und/oder auf den Bodenflächen 190, 200 der Schalenelemente 19, 20 ist eine Mehrzahl von erhaben von den Oberflächen 164, 165 bzw. von den Bodenflächen 190, 200 wegstehenden Vorsprüngen 166 vorgesehen. Die- Vorsprünge 166 können in der Ebene parallel zu den Oberflächen 164, 165 bzw. zu den Bodenflächen 190, 200 einen im wesentlichen kreisförmigen oder tropfenförmigen Querschnitt aufweisen. Grundsätzlich können die Vorsprünge 166 aber beliebig geeignet ausgewählt und teilweise auch in unterschiedlichen Höhen an unterschiedlichen Stellen der Oberflächen 164, 165 des Abstandselements 16 bzw. dem Bodenflächen 190, 200 der Schalenelemente 19, 20 vorgesehen sein. Die Abstandselemente 16 und/oder die Schalenelemente 19, 20 können aus Kunststoff, vorzugsweise aus spritzfähigem Kunststoff bestehen. Der Kunststoff kann Polystyrol, Acrylnitril-Butadien-Styrol-Copolymere (ABS), Styrol-Acrylnitril-Copolymere (SAN), z.B. Luran™, sein.

Zur bestimmungsgemäßen Funktion der Vorrichtung 10 wird eine bestimmte Menge an Stapelschalen 27 vorbereitet, und zwar auf die vorbeschriebene Weise. Die fertig vorbereiteten, d.h. vorkonfektionierten Stapelschalen 27 unter jeweiligem Einschluß des Stapels 18 aus Abstandselementen 16 und Filterelementen 17 werden dann über die Renkverbindung 28 jeweils zwischen zwei Stapelschalen 27, 270 verbunden und mittels des Verbindungsmittels 29 gesichert. Nachfolgend wird die miteinander verbundene Mehrzahl von Stapelschalen 27 in eine Öffnung des Gehäuses 11 eingeführt, wobei sichergestellt wird, daß der Permeatabflußkanal 22 der Stapelschalen 27 untereinander druckdicht verbunden sind und von der letzten Stapelschale 27 in eine entsprechende Öffnung des die andere Gehäuseöffnung abschließende Endelements 111 mündet. Nachfolgend wird das Gehäuse 11 durch das zweite Endelement 110 über das Ringelement 115 verschlossen, wobei sichergestellt ist, daß eine axiale Bewegung der Mehrzahl der miteinander verbundenen Stapelschalen 27 im Gehäuse 11 nicht möglich ist. Nachfolgend wird zum bestimmungsgemäßen Gebrauch das Strömungsmedium 15 in die Vorrichtung 10 geführt und umströmt quasi in Form eines offenen Kanals alle hintereinander angeordneten Filterelemente 17 der jeweils hintereinander angeordneten Stapelschalen 27 bzw. der darin hintereinander angeordneten Stapel 18. Dadurch wird vom Einlaß 12 zum Auslaß 13 eine hohe Strömungsgeschwindigkeit des Strömungsmediums 15 erreicht. Das Permeat, das von den Membrankissen auf bekannte Weise geliefert wird, fließt über die Permeatabflußöffnungen 160, 161 bzw. die Permeatablauföffnungen 23, 24 der Schalenelemente 19, 20 zum Permeatabflußkanal 22 und von dort zum vorrichtungsseitigen Auslaß 14 und wird von dort einer weiteren Verwendung zugeführt.

### Bezugszeichenliste

- 10: Vorrichtung
- 11: Gehäuse
- 110: Endelement
- 111: Endelement
- 112: Dichtungsmittel
- 113: Dichtungsmittel
- 114: Ringelement
- 115: Ringelement
- 12: Einlaß
- 13: Auslaß (Retentat)
- 14: Auslaß (Permeat)
- 15: Strömungsmedium
- 16: Abstandselement
- 160: Permeatabflußöffnung
- 161: Permeatabflußöffnung
- 162: Vertiefung
- 163: Dichtelement
- 164: Oberfläche
- 165: Oberfläche
- 166: Vorsprung
- 17: Filterelement (Membrankissen)
- 18: Stapel
- 19: Schalenelement
- 190: Bodenfläche
- 20: Schalenelement
- 200: Bodenfläche
- 21: Längsrichtung
- 22: Permeatabflußkanal
- 23: Permeatablauföffnung
- 24: Permeatablauföffnung
- 25: Innenbodenbereich
- 26: Verbindungsmittel
- 27: Stapelschale
- 270: Stapelschale
- 28: Renkverbindung
- 29: Verbindungsmittel

## Patentansprüche

1. Vorrichtung (10) zum Filtern und Trennen von Strömungsmedien durch Umkehrosmose sowie Mikro-, Ultra- und Nanofiltration mit einem druckdichten Gehäuse (11) mit einem Einlaß (12) für das Strömungsmedium und Auslässen (13; 14) für das Retentat sowie das Permeat und einer Mehrzahl von gesonderten Stapeln (18) von flächigen, vom Strömungsmedium umflossenen Abstandselementen (16) mit jeweils dazwischen angeordneten Filterelementen (17) nach Art eines Membrankissens, wobei die Stapel (18) hintereinander oder nebeneinander im Strömungsweg des Strömungsmediums angeordnet sind, und wobei das Gehäuse (11) einen Längskanal für das Strömungsmedium bildet, der vom Einlaß (12) zum Auslaß (13) der Vorrichtung (10) im wesentlichen umlenkungsfrei verläuft, und wobei die Stapel (18) jeweils von zwei die Stapel (18) in sich einschließenden, im Außenquerschnitt im wesentlichen halbkreisförmigen Schalenelementen (19, 20) aufgenommen werden.

2. Vorrichtung nach Anspruch 1, **dadurch gekennzeichnet, daß** wenigstens eines der Schalenelemente (19; 20) einen das Schalenelement (19; 20) in Längsrichtung (21) durchquerenden Permeatabflußkanal (22) aufweist, der mit Permeatabflußöffnungen (23, 24), die in den Innenbodenbereich (25) der Schalenelemente (19, 20) münden, verbunden ist.

3. Vorrichtung nach Anspruch 1 oder 2, **dadurch gekennzeichnet, daß** der Innenquerschnitt der Schalenelemente (19, 20) im wesentlichen rechteckig ausgebildet ist.

4. Vorrichtung nach einem der Ansprüche 1 bis 3, **dadurch gekennzeichnet, daß** die Schalenelemente (19, 20) unter Einschluß des jeweiligen Stapels (18) durch Verbindungsmittel (26) lösbar verbindbar sind.

5. Vorrichtung nach einem der Ansprüche 1 bis 3, **dadurch gekennzeichnet, daß** eine aus zwei miteinander verbundenen Schalenelementen (19, 20) gebildete Stapelschale (27) mit einer benachbarten Stapelschale (270) über eine an den Stapelschalen (27, 270) ausgebildete Renkverbindung (28) lösbar verbindbar sind.

6. Vorrichtung nach Anspruch 5, **dadurch gekennzeichnet, daß** zwei benachbarte Stapelschalen (27, 270) im verbundenen Zustand mittels eines Verbindungsmittels (19) lösbar sicherbar sind.

7. Vorrichtung nach einem der Ansprüche 1 bis 6, **dadurch gekennzeichnet, daß** die Abstandselemente (16) eine im wesentlichen rechteckige Form aufweisen und zwei in Längsrichtung voneinander beabstandete Permeatabflußöffnungen (160, 161) aufweisen.

8. Vorrichtung nach Anspruch 7, **dadurch gekennzeichnet, daß** um die Permeatabflußöffnungen (160, 161) herum verlaufende Vertiefungen (162) vorgesehen sind, in denen Dichtelemente (163) zur Abdichtung gegenüber den Membrankissen (17) aufnehmbar sind.

9. Vorrichtung nach einem der Ansprüche 1 bis 8, **dadurch gekennzeichnet, daß** auf den Oberflächen (164, 165) des Abstandselements (16) eine Mehrzahl von erhaben von den Oberflächen (164, 165) wegstehenden Vorsprüngen (166) ausgebildet ist.

10. Vorrichtung nach einem der Ansprüche 1 bis 9, **dadurch gekennzeichnet, daß** auf der im wesentlichen ebenen, inneren Bodenfläche (190, 200) der Schalenelemente (19, 20) eine Mehrzahl von erhaben von den Bodenflächen (190, 200) wegstehenden Vorsprüngen (166) ausgebildet ist.

11. Vorrichtung nach Anspruch 9 oder 10, **dadurch gekennzeichnet, daß** die Vorsprünge (166) in einer Ebene parallel zu den Oberflächen (164, 165) der Bodenflächen (190, 200) einen im wesentlichen kreisförmigen Querschnitt aufweisen.

12. Vorrichtung nach einem der Ansprüche 9 bis 11, **dadurch gekennzeichnet, daß** die Vorsprünge (166) in einer Ebene parallel zu den Oberflächen (164, 165) oder den Bodenflächen (190, 200) einen im wesentlichen tropfenförmigen Querschnitt aufweisen.

13. Vorrichtung nach einem der Ansprüche 1 bis 12, **dadurch gekennzeichnet, daß** das Abstandselement (16) und/oder das Schalenelement (19, 20) aus Kunststoff besteht.

14. Vorrichtung nach Anspruch 13, **dadurch gekennzeichnet, daß** der Kunststoff Polystyrol ist.

15. Vorrichtung nach Anspruch 13, **dadurch gekennzeichnet, daß** der Kunststoff Acrylnitril-Butadien-Styrol-Copolymere (ABS) ist.

16. Vorrichtung nach Anspruch 13, **dadurch gekennzeichnet, daß** der Kunststoff ein Styrol-Acrylnitril-Copolymer (SAN) ist.

## Claims

1. Device (10) for filtering and separating flow media by reverse osmosis and microfiltration, ultrafiltration and nanofiltration, having a pressure-tight housing (11) with an inlet (12) for the flow medium and outlets (13; 14) for the retentate and the permeate, and a plurality of separate stacks (18) of sheet-like spacer elements (18) around which the flow medium flows and which have filter elements (17) arranged between them, in the manner of a membrane cushion, the stacks (18) being arranged one behind the other or next to one another in the flow path of the flow medium, and the housing (11) forming a longitudinal passage for the flow medium, running from the inlet (12) to the outlet (13) of the device (10) substantially without diversions, and the stacks (18) in each case being accommodated by two shell elements (19, 20) which enclose the stacks (18) and are substantially semicircular in external cross section.

2. Device according to Claim 1, **characterized in that** at least one of the shell elements (19; 20) has a permeate-discharge passage (22) which crosses through the shell element (19; 20) in the longitudinal direction (21) and is connected to permeate-discharge openings (23, 24) which open out into the inner-base region (25) of the shell elements (19, 20).

3. Device according to Claim 1 or 2, **characterized in that** the internal cross section of the shell elements (19, 20) is of substantially rectangular design.

4. Device according to one of Claims 1 to 3, **characterized in that** the shell elements (19, 20) can be releasably connected by connecting means (26) so as to enclose the respective stack (18).

5. Device according to one of Claims 1 to 3, **characterized in that** a stack shell (27), which has been formed from two shell elements (19, 20) connected to one another, can be releasably connected to an adjacent stack shell (270) by means of a bayonet connection (28) formed on the stack shells (27, 270).

6. Device according to Claim 5, **characterized in that** two adjacent stack shells (27, 270), in the connected state, can be releasably secured by means of a connecting means (19).

7. Device according to one of Claims 1 to 6, **characterized in that** the spacer elements (16) are substantially rectangular in shape and have two permeate-discharge openings (160, 161) which are spaced apart from one another in the longitudinal direction.

8. Device according to Claim 7, **characterized in that** there are recesses (162) which run around the permeate-discharge openings (160, 161) and in which sealing elements (163) for forming a seal with respect to the membrane cushions (17) can be accommodated.

9. Device according to one of Claims 1 to 8, **characterized in that** a plurality of raised projections (166) which protrude from the surfaces (164, 165) of the spacer element (16), are formed on the surfaces (164, 165).

10. Device according to one of Claims 1 to 9, **characterized in that** a plurality of raised projections (166), which protrude from the substantially planar, inner base surface (190, 200) of the shell elements (19, 20), are formed on the base surfaces (190, 200).

11. Device according to Claim 9 or 10, **characterized in that** the projections (166), in a plane which is parallel to the surfaces (164, 165) of the base surfaces (190, 200), are substantially circular in cross section.

12. Device according to one of Claims 9 to 11, **characterized in that** the projections (166), in a plane which is parallel to the surfaces (164, 165) or the base surfaces (190, 200), are substantially drop-shaped in cross section.

13. Device according to one of Claims 1 to 12, **characterized in that** the spacer element (16) and/or the shell element (19, 20) consists of plastic.

14. Device according to Claim 13, **characterized in that** the plastic is polystyrene.

15. Device according to Claim 13, **characterized in that** the plastic is acrylonitrile/butadiene/styrene copolymer (ABS).

16. Device according to Claim 13, **characterized in that** the plastic is a styrene/acrylonitrile copolymer (SAN).

## Revendications

1. Dispositif (10) de filtrage et de séparation de fluides en écoulement par osmose inverse et par micro-filtration, ultra-filtration et nano-filtration, comportant un boîtier (11) étanche à la pression avec une admission (12) pour le fluide en écoulement et des sorties (13 ; 14) pour le rétentat ainsi que pour le perméat, et une pluralité d'empilements (18) séparés d'éléments d'écartement (16) surfaciques entourés par le fluide en écoulement avec des éléments de filtre (17) agencés entre ceux-ci à la manière d'un coussin à membrane, les empilements (18) étant agencés les uns derrière les autres ou les uns à côté des autres dans la voie d'écoulement du fluide en écoulement, et le boîtier (11) formant pour le fluide en écoulement un canal longitudinal qui s'étend depuis l'admission (12) vers la sortie (13) du dispositif (10) sensiblement sans changement de direction, et les empilements (18) étant chacun reçus par deux éléments de coque (19, 20) enfermant entre eux les empilements (18), de section transversale extérieure sensiblement semi-circulaire.

2. Dispositif selon la revendication 1, **caractérisé en ce qu'**au moins un des éléments de coque (19, 20) présente un canal d'évacuation de perméat (22) traversant l'élément de coque (19 ; 20) en direction longitudinale (21), ledit canal étant relié à des orifices d'évacuation de perméat (23, 24) qui débouchent dans la région de fond intérieure (25) des éléments de coque (19, 20).

3. Dispositif selon la revendication 1, **caractérisé en ce que** la section transversale intérieure des éléments de coque (19, 20) est réalisée sensiblement rectangulaire.

4. Dispositif selon l'une quelconque des revendications 1 à 3, **caractérisé en ce que** les éléments de coque (19, 20) peuvent être reliés de manière détachable à l'aide de moyens de liaison (26), en enfermant l'empilement respectif (18).

5. Dispositif selon l'une quelconque des revendications 1 à 3, **caractérisé en ce qu'**une coque d'empilage (27) formée par deux éléments de coque (19, 20) reliés l'un à l'autre peut être reliée de manière détachable avec une coque d'empilage (270) voisine par l'intermédiaire d'un assemblage à baïonnette (28) réalisé sur les coques d'empilage (27, 270).

6. Dispositif selon la revendication 5, **caractérisé en ce que** deux coques d'empilage (27, 270) voisines peuvent être bloquées de manière détachable à l'état relié au moyen d'un organe de liaison (19).

7. Dispositif selon l'une quelconque des revendications 1 à 6, **caractérisé en ce que** les éléments d'écartement (16) présentent une forme sensiblement rectangulaire et comportent deux orifices d'évacuation (160, 161) de perméat espacés l'un de l'autre en direction longitudinale.

8. Dispositif selon la revendication 7, **caractérisé en ce qu'**autour des orifices d'évacuation (160, 161) de perméat sont prévus des creux (162) dans lesquels peuvent être reçus des éléments d'étanchéité (163) pour réaliser une étanchéité par rapport aux coussins à membrane (17).

9. Dispositif selon l'une quelconque des revendications 1 à 8, **caractérisé en ce que** sur les surfaces (164, 165) de l'élément d'écartement (16) sont réalisées une pluralité de saillies (166) se détachant en relief des surfaces (164, 165).

10. Dispositif selon l'une quelconque des revendications 1 à 9, **caractérisé en ce que** sur la surface de fond intérieure (190, 200) sensiblement plane des éléments de coque (19, 20) sont réalisées une pluralité de saillies (166) se détachant en relief depuis la surface de fond (190, 200).

11. Dispositif selon l'une ou l'autre des revendications 9 et 10, **caractérisé en ce que** les saillies (166) présentent une section transversale sensiblement circulaire dans un plan parallèle aux surfaces (164, 165) des surfaces de fond (190, 200).

12. Dispositif selon l'une quelconque des revendications 9 à 11, **caractérisé en ce que** les saillies (166) présentent une section transversale sensiblement en forme de goutte dans un plan parallèle aux surfaces (164, 165) des surfaces de fond (190, 200).

13. Dispositif selon l'une quelconque des revendications 1 à 12, **caractérisé en ce que** l'élément d'écartement (16) et/ou l'élément de coque (19, 20) est en matière plastique.

14. Dispositif selon la revendication 13, **caractérisé en ce que** la matière plastique est du polystyrène.

15. Dispositif selon la revendication 13, **caractérisé en ce que** la matière plastique est du copolymère acrylonitrile-butadiène-styrène (ABS).

16. Dispositif selon la revendication 13, **caractérisé en ce que** la matière plastique est du copolymère styrène-acrylonitrile (SAN).
